Europäisches Patentamt

European Patent Office

Office européen des brevets

(11) Veröffentlichungsnummer: **0 315 703**
**A1**

## (12) EUROPÄISCHE PATENTANMELDUNG

(21) Anmeldenummer: **87115729.3**

(22) Anmeldetag: **27.10.87**

(51) Int. Cl.⁴: **G11B 23/023**

(43) Veröffentlichungstag der Anmeldung:
**17.05.89 Patentblatt 89/20**

(84) Benannte Vertragsstaaten:
**DE ES FR GB IT NL SE**

(71) Anmelder: **Herbert Richter,
Metallwaren-Apparatebau GmbH & Co.
Birkenfelder Strasse 1-7
D-7530 Pforzheim-Bü(DE)**

(72) Erfinder: **Richter, Herbert
Birkenfelder Strasse 1 - 7
D-7530 Pforzheim(DE)**

(74) Vertreter: **Trappenberg, Hans
Postfach 1909
D-7500 Karlsruhe 1(DE)**

(54) **Magazin für Tonbandkassetten.**

(57) Um eine preiswerte Herstellung der Magazine wie auch einen Schutz der empfindlichen Tonbandkassetten gegen mechanische Beschädigungen und Staubzutritt zu erreichen, wird ein Magazin, insbesondere zur Verwendung in Kraftfahrzeugen, vorgeschlagen, in das die Tonbandkassetten, in ihrer Kassettenschachtel liegend, in Einhandbedienung eingeschoben und wieder herauszunehmen sind.

Fig.1

EP 0 315 703 A1

## Magazin für Tonbandkassetten

Die Erfindung betrifft ein Magazin für Tonbandkassetten, insbesondere zur Verwendung in Kraftfahrzeugen, bestehend aus mehreren in einem Gehäuse vorgesehenen Kammern, die einen die Aufnahme jeweils einer Kassette ermöglichenden freien Querschnitt aufweisen, wobei die Kammern aus schubladenförmigen, im Gehäuse aufeinander gestapelten, aus Kunststoff bestehenden Einzelbauteilen gebildet sind, die jeweils zwei nebeneinander liegende, durch einen Abstandskasten voneinander getrennte Kammern aufweisen, deren Seitenteile einschließlich des Abstandskasten etwas kürzer sind als deren Breitseiten, so, daß die Kassetten mit ihrer kleinen Schmalseite voran auf der Breitseite liegend in die Kammern einzuschieben sind.

Ein bekanntes derartiges Magazin ist in der europäischen Patentanmeldung 85 111 504.8 (Veröffentlichungsnummer 0 215 965) beschrieben und dargestellt. Dieses bekannte Magazin dient allerdings lediglich zur Aufnahme der Tonbandkassetten. Um zu verhindern, daß die Wickelkörper der Tonbandkassetten, beispielsweise durch das stete Rütteln in einem Kraftfahrzeug, sich verdrehen und damit ein Lockern des Bandwickels herbeigeführt wird, greifen in diese Wickelkörper beim Einschieben federnd nachgiebige Hemmstücke ein. Derartige Hemmstücke sind jedoch bereits in der üblichen Kassettenschachtel vorgesehen, ebenfalls zum gleichen Zweck, also um ein Verdrehen der Wickelkörper der Tonbandkassetten zu vermeiden.

Bei sämtlichen derartigen Magazinen ging man bisher davon aus, daß lediglich die Tonbandkassetten zu speichern sind, einmal um das Magazin volumenmäßig klein zu halten, und zum andern auch, um eine sichere Fixierung der Wickelkörper zu erreichen. Tatsächlich findet jedoch durch die Maßnahmen zum Eingreifen in die Wickelkörper keine Volumenverminderung durch das Weglassen der Kassettenschachtel statt. Außerdem werden derartige Magazine durch den teilweise recht komplizierten Aufbau der Hemmechanik sehr aufwendig, sind also schwierig herzustellen und damit teuer.

Die Erfindung hat sich die Aufgabe gestellt, ein derartiges Magazin anzugeben, das sicher die Tonbandkassetten verwahrt, jedoch auf äußerst einfache und wirtschaftliche Weise herzustellen ist.

Erreicht wird dies in erfindungsgemäßer Weise dadurch, daß die Kammergröße den Außenabmessungen einer handelsüblichen Kassettenschachtel (mit innenliegender Tonbandkassette) angepaßt ist und daß aus dem Kammermaterial, vorzugsweise der oberen Breitseite, mindestens eine in die Kammer hineinragende Federzunge und aus demjenigen der Seitenteile jeweils eine seitlich an der Kassettenschachtel angreifende Blattfeder ausgeschnitten ist.

Nicht mehr also wie bei den bekannten Magazinen werden lediglich die Tonbandkassetten magaziniert, sondern die Kassettenschachteln, in denen die Tonbandkassetten liegen. Wie bereits angeführt, können sich die Wickelkörper der Tonbandkassetten in diesen Kassettenschachteln ebenfalls nicht verdrehen, da in den Kassettenschachteln Hemmkörper vorgesehen sind. In dem erfindungsgemäßen Magazin sind also die Tonbandkassetten ebenso sicher verwahrt beziehungsweise ist der Bandwickel ebenso gesichert wie auch in den bekannten Einrichtungen dieser Art. Darüber hinaus jedoch ist die Tonbandkassette allseitig von der Kassettenschachtel umschlossen, ist also sowohl gegen mechanische Beschädigungen wie auch gegen Staubzutritt geschützt.

Durch den Wegfall sämtlicher komplizierter Einrichtungen zum Halten des Wickelkörpers der Tonbandkassetten ist darüber hinaus das Magazin nach der Erfindung auch äußerst einfach und damit sehr preiswert herzustellen.

Trotzdem ergeben sich die gleichen Vorteile wie auch bei dem bekannten Magazin nach der europäischen Patentanmeldung 85 111 504.8. Auch bei dem Magazin nach der Erfindung können die Kassettenschachteln unschwer mit Daumen und einem gegenüberstehenden Finger ergriffen werden, so daß auch hier eine Einhandbedienung möglich ist. Erreicht wird dies insbesondere dadurch, daß die plattenförmig überstehenden freien Breitseitenteile der Kammer geringfügig schmaler sind als die Kammerbreitseite. Dadurch ergreifen die Finger tatsächlich nur die Kassettenschach tel, zerren also nicht an Teilen des Magazins. Außerdem ist auch das Einschieben der Kassettenschachtel in die entsprechenden Kammern dadurch sehr erleichtert, daß die Breite der Federzunge zumindest bei einem Viertel der Kammerbreite liegt und die Federzunge, wie auch die Blattfedern, in Kassetten-Einschubrichtung verlaufen. Das erste Merkmal der Federzunge bewirkt einen verhältnismäßig geringen spezifischen Druck, wodurch auch auf die Kassettenschachtel aufgeklebte Titel etc. geschont werden. Das zweite Merkmal dient dazu, zusammen mit der Breite der Federzunge, das leichte Einschieben zu erreichen und gleichzeitig auch das ungewollte Herauswandern der Kassetten durch die diesem Herauswandern entgegenstehenden Federn zu vermeiden.

Es konnte schon dargelegt werden, daß die empfindlichen Tonbandkassetten in ihren Kassettenschachteln gegen Staubzutritt und mechanische Beschädigungen geschützt sind. Darüber hinaus ist auch ein geringerer Wärmeübergang zu den Tonbandkassetten zu verzeichnen, der nach einem weiteren Merkmal der Erfindung noch dadurch gemindert wird, daß eine Vielzahl schubladenförmiger Einzelbauteile unter Einfügung seitlich oben und unten anliegender Kunststoffschaum-Platten aufeinander gestapelt und im Gehäuse eingepreßt sind. Dadurch ist das empfindliche Tonband durch insgesamt fünf Materialien geschützt: Durch die Außenhaut des Gehäuses, durch die Kunststoffschaum-Platten, durch das Material der Einzel-Bauteile, durch das Material der Kassettenschachtel und letztlich noch durch das Material der Tonbandkassetten selbst.

Auf der Zeichnung ist ein Ausführungsbeispiel des erfindungsgemäßen Magazines schematisch dargestellt, und zwar zeigen:

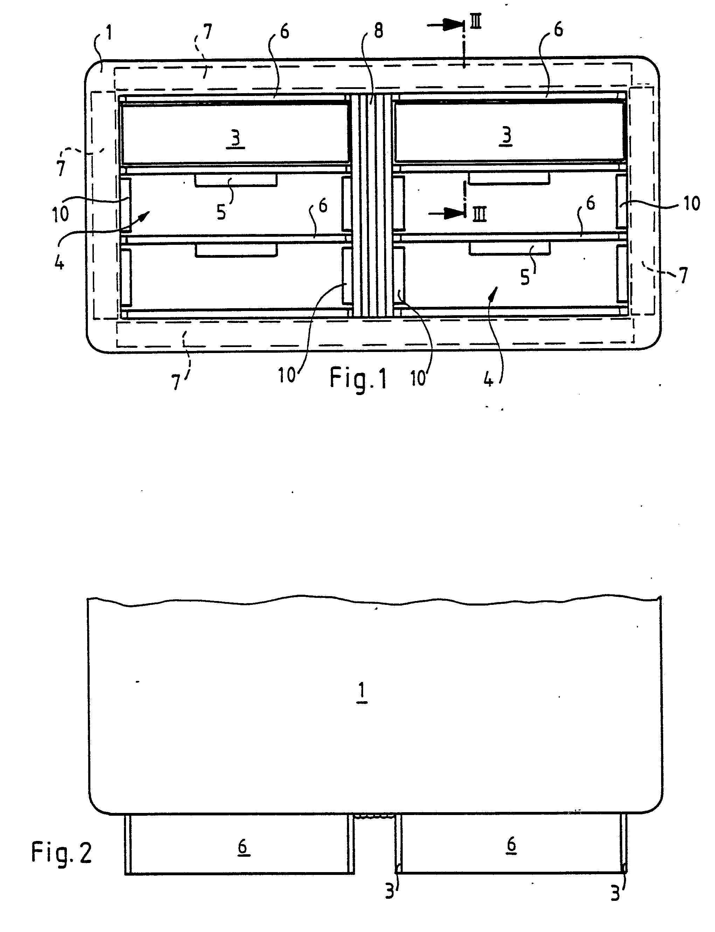

Fig. 1 eine Frontansicht,

Fig. 2 eine Draufsicht,

Fig. 3 einen Schnitt nach der Schnittlinie III-III der Fig. 1 und

Fig. 4 die Unteransicht eines Einzelbauteils.

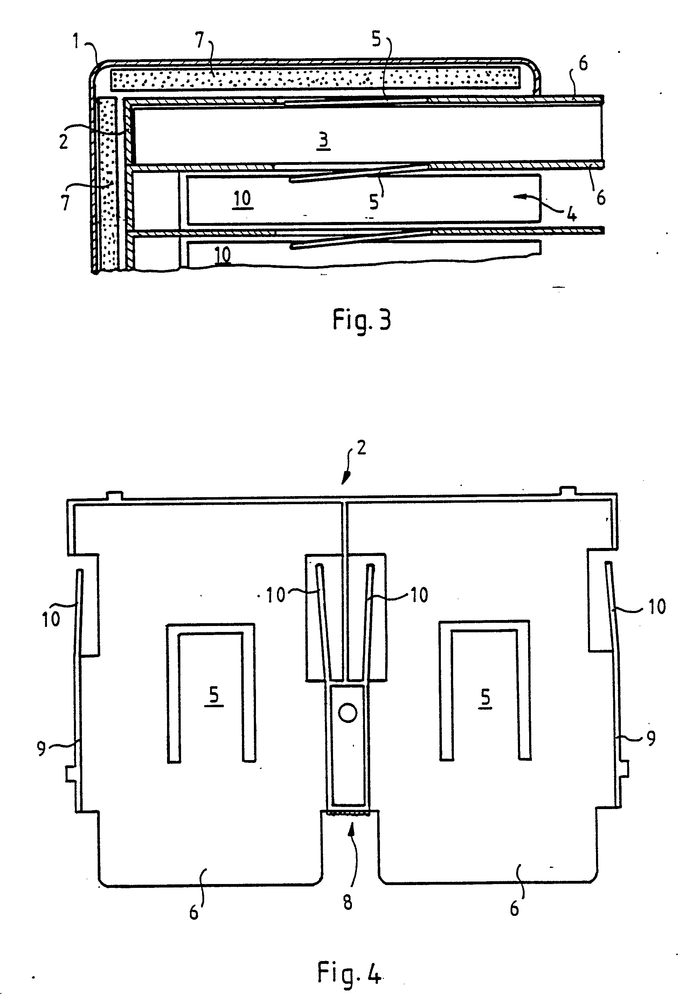

In ein Gehäuse (1) sind mehrere schubladenförmige Einzelbauteile (2) eingefügt, die Kammern (4) mit einem den äußeren Abmessungen von Kassettenschachteln (3) für Tonbandkassetten entsprechenden freien Querschnitt aufweisen. Diese Kassettenschachteln (3) werden mit ihrer kleinen Schmalseite voran auf der Breitseite liegend in diese Kammern (4) eingeschoben und dort durch Federzungen (5) und seitlich angreifende Blattfedern (10) in ihrer Lage gehalten. Hierbei enden die Seitenteile (9) dieser schubladenförmigen Einzelbauteile (2), wie auch ein zwischen zwei nebeneinanderliegenden Kammern (4) eingeschobener Abstandskasten (8), bei der Vorderkante des Gehäuses (1), während die Breitseite (6), also der obere Abschluß der Kammer (4), über diese Gehäusevorderkante hinausspringt. Dieser plattenförmige überstehende Teil (6) weist eine geringfügig kleinere Breite als die Kassettenschachtel (3) auf, so daß, wie insbesondere aus Fig. 2 zu ersehen ist, die Kassettenschachtel beidseits über diesen plattenförmigen Teil (6) übersteht. Durch diese Gestaltung des Magazins ist ein einfaches und sicheres Ergreifen der Kassettenschachteln (3) möglich.

Innerhalb des Gehäuses (1) sind Kunststoffschaum-Platten (7) eingefügt, die sowohl als Wärmedämmung dienen, wie auch Vibrationen vermindern. Außerdem erfolgt durch diese Kunststoffschaum-Platten auch eine Schalldämmung.

Das Gehäuse (1) kann mit einem Fuß zum Aufschrauben versehen werden oder kann auch durch Klebestreifen an entsprechenden Flächen befestigt werden.

## Ansprüche

1. Magazin für Tonbandkassetten, insbesondere zur Verwendung in Kraftfahrzeugen, bestehend aus mehreren in einem Gehäuse vorgesehenen Kammern, die einen die Aufnahme jeweils einer Kassette ermöglichenden freien Querschnitt aufweisen, wobei die Kammern aus schubladenförmigen, im Gehäuse aufeinander gestapelten, aus Kunststoff bestehenden Einzelbauteilen gebildet sind, die jeweils zwei nebeneinander liegende, durch einen Abstandskasten voneinander getrennte Kammern aufweisen, deren Seitenteile einschließlich des Abstandskasten etwas kürzer sind als deren Breitseite, so daß die Kassetten mit ihrer kleinen Schmalseite voran auf der Breitseite liegend in die Kammern einzuschieben sind, dadurch gekennzeichnet, daß die Kammergröße den Außenabmessungen einer handelsüblichen Kassettenschachtel (3) (mit innenliegender Tonbandkassette) angepaßt ist und daß aus dem Kammermaterial der oberen Breitseite, mindestens eine in die Kammer (4) hineinragende Federzunge (5) und aus demjenigen der Seitenteile (9) jeweils eine seitlich an der Kassettenschachtel angreifende Blattfeder (10) ausgeschnitten ist.

2. Magazin nach Anspruch 1, dadurch gekennzeichnet, daß die Breite der Federzunge (5) zumindest bei einem Viertel der Kammerbreite liegt.

3. Magazin nach Anspruch 1 oder 2, dadurch gekennzeichnet, daß sowohl die Federzunge (5), wie auch die Blattfedern (10), in Kassetten-Einschubrichtung verlaufen.

4. Magazin nach Anspruch 1, dadurch gekennzeichnet, daß die plattenförmig überstehenden freien Breitseitenteile (6) der Kammer (4) geringfügig schmaler sind als die Kammerbreitseite.

5. Magazin nach Anspruch 1, dadurch gekennzeichnet, daß eine Vielzahl schubladenförmiger Einzelbauteile (2) unter Einfügung seitlich, oben und unten anliegender Kunststoffschaum-Platten (7) im Gehäuse (1) aufeinander gestapelt und im Gehäuse (1) eingepreßt sind.

RX1077

Fig.1

Fig.2

EP 0 315 703 A1

Fig. 3

Fig. 4

Europäisches
Patentamt

Nummer der Anmeldung

EP 87 11 5729

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | EP-A-0 249 997 (H. RAASCH) <br> * Patentansprüche 1,2,8; Figur 1 * <br> --- | 1,5 | G 11 B 23/023 |
| A | GB-A-1 540 795 (CRUBIBLE PTY. LTD.) <br> * Figur 1; Seite 1, Zeilen 81-83 * <br> --- | 1 | |
| A | BE-A- 894 483 (COMPAGNIE GENERALE BELGE DES ISOLANTS) <br> * Figuren 1,2; Patentanspruch 1 * <br> --- | 1 | |
| A | GB-A-2 011 354 (IDN AG) <br> * Figur 29; Seite 1, Zeilen 7-10 * <br> ----- | 1 | |

|  |
|---|
| **RECHERCHIERTE SACHGEBIETE (Int. Cl.4)** |
| G 11 B 23/00 <br> B 65 D 85/00 |

Der vorliegende Recherchenbericht wurde für alle Patentansprüche erstellt

| Recherchenort | Abschlußdatum der Recherche | Prüfer |
|---|---|---|
| BERLIN | 31-05-1988 | GERARD E.A.S. |